(19) Europäisches Patentamt
European Patent Office
Office européen des brevets

(11) **EP 3 051 486 A1**

(12) **EUROPEAN PATENT APPLICATION**

(43) Date of publication:
**03.08.2016 Bulletin 2016/31**

(51) Int Cl.:
***G06T 5/00*** (2006.01)   ***H04N 19/30*** (2014.01)
***H04N 19/46*** (2014.01)

(21) Application number: **15305108.1**

(22) Date of filing: **30.01.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Andrivon, Pierre**
**35576 Cesson-Sévigné (FR)**

• **Lasserre, Sébastien**
**35576 Cesson-Sévigné (FR)**
• **Le Leannec, Fabrice**
**35576 Cesson-Sévigné (FR)**
• **Bordes, Philippe**
**35576 Cesson-Sévigné (FR)**
• **François, Edouard**
**35576 Cesson-Sévigné (FR)**

(74) Representative: **Huchet, Anne**
**Technicolor**
**1, rue Jeanne d'Arc**
**92443 Issy-les-Moulineaux Cedex (FR)**

(54) **Method and apparatus for encoding and decoding high dynamic range (HDR) videos**

(57)    To preserve backward compatibility with a non-HDR device or service, an HDR picture may be represented using a modulation value and an SDR picture representative of the HDR picture. The modulation value and the SDR picture can then be encoded into the bitstream. At the receiving side, the modulation value and the SDR picture can be decoded. Based on the modulation value, the SDR picture can be mapped to a decoded HDR picture. For a non-HDR device or service, the modulation value information may be discarded and only the SDR picture is decoded. In particular, the modulation value may be explicitly signaled through an SEI (Supplemental Enhancement Information), a Parameter Set (PPS or SPS), a header, or a VUI (Video Usability Information).

FIG. 1

**Description**

TECHNICAL FIELD

This invention relates to a method and an apparatus for encoding and decoding a High Dynamic Range (HDR) video, and more particularly, to a method and an apparatus for conveying illumination information for an HDR video.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

The dynamic range of luminance in a picture can be defined as a ratio between the highest luminance value of an image and the lowest luminance value of the image:

$$r = \text{bright/dark} \qquad (1)$$

where "bright" denotes the highest luminance value of the image and "dark" denotes the lowest luminance value of the image. The dynamic range "r" is generally expressed as a number of power of two, called f-stops or equivalently stops. For instance, a ratio 1000 is about 10 f-stops, which is the typical dynamic range of standard non-HDR videos, also called SDR (Standard Dynamic Range) videos or equivalently LDR (Low Dynamic Range) videos.

Video signals used in the current consumer market are usually represented by 8 bits, and can handle up to 10 f-stops as shown below. An 8-bit video can represent a higher dynamic range than the obvious 8 f-stops if the video signal is not represented linearly but uses a non-linear dynamic compression curve. For instance, applying a BT.709 OETF (Opto-Electronic Transfer Function) curve on a linear light video signal, defined by the ITU-R and approximately equivalent to a gamma (power function) 1/2.2 to 8-bit video signals, would allow a dynamic range of more than 10 f-stops. In particular, the inverse OETF curve is represented as

$$L = \begin{cases} \frac{V}{4.5} & 0 \leq V \leq 0.081 \\ \left(\frac{V+0.099}{1.099}\right)^{\frac{1}{0.45}} & 1 \geq V \geq 0.081 \end{cases} \qquad (2)$$

on the input range $V \in [0,1]$. The peak at $V$=1 outputs the brightest value at $L$=1, and the lowest non-zero coded value $V$=1/255 outputs the darkest value at $L$=0.00087. Thus, the dynamic range for an 8-bit video signal using the OETF curve is r = 1/0.00087 = 1147, roughly 10 f-stops. Since 8-bit video signals can have a dynamic range around 10 f-stops, an HDR video usually refers to a video with a dynamic range noticeably higher than 10 f-stops.

The exact dynamic range that an HDR video application supports may vary. For example, the SMPTE (Society of Motion Picture and Television Engineers) defines a Perceptual Quantizer EOTF (Electro-Optical Transfer Function) also known as PQ EOTF (defined in SMPTE ST. 2084) non-linear transfer curve, preferably coded on 12 bits, which may code the luminance on the range from 0.005 nits to 10000 nits (nit is a term referring to candela per square meter units or cd/m$^2$), leading to a ratio of 2 million or about 21 f-stops. Practically, first deployments of HDR at home may be expected to be TV sets providing not much more than a peak brightness of 1000 nits and a dynamic range of 15 f-stops, preferably on 10 bits data format if possible. This restricted HDR is also referred to as Extended Dynamic Range (EDR). Typically, an SDR video has a bit depth of 8 or 10 bits, and an HDR video has a bit depth of 10 bits and higher. For example, an SDR video can be a 4:2:0 Y'CbCr 10-bit video, and an HDR video can be a PQ OETF Y'CbCr 12-bit video.

SUMMARY

According to an aspect of the present principles, a method for decoding a bitstream including a High Dynamic Range (HDR) picture is presented, comprising: determining a modulation value from at least one syntax element included in the bitstream; and determining the HDR picture responsive to the determined modulation value and a Standard Dynamic Range (SDR) picture included in the bitstream.

According to another aspect of the present principles, an apparatus for decoding a bitstream including a High Dynamic Range (HDR) picture is presented, comprising: a communication interface configured to access the bitstream; and a decoder configured to determine a modulation value from at least one syntax element included in the bitstream, and determine the HDR picture responsive to the determined modulation value and a Standard

Dynamic Range (SDR) picture included in the bitstream.

According to another aspect of the present principles, a non-transitory computer readable storage medium having stored thereon instructions for decoding a bitstream including a High Dynamic Range (HDR) picture is presented, the instructions causing a processor to perform at least: determining a modulation value from at least one syntax element included in the bitstream; and determining the HDR picture responsive to the determined modulation value and a Standard Dynamic Range (SDR) picture included in the bitstream.

BRIEF DESCRIPTION OF THE DRAWINGS

FIG. 1 illustrates an exemplary SDR/HDR distribution workflow.

FIG. 2 illustrate an exemplary method for encoding an HDR video according to an embodiment of the present principles.

FIG. 3 illustrate an exemplary method for decoding an HDR video according to an embodiment of the present principles.

FIG. 4 illustrates pictorial examples of functions mapping HDR luminance to SDR luminance according to an embodiment of the present principles.

FIG. 5 illustrates a block diagram depicting an exemplary system in which various aspects of the exemplary embodiments of the present principles may be implemented.

FIG. 6 illustrates a block diagram depicting an example of a video processing system that may be used with one or more implementations.

FIG. 7 illustrates a block diagram depicting another example of a video processing system that may be used with one or more implementations.

DETAILED DESCRIPTION

Many video coding standards and video codecs have been developed for SDR videos, for example, but not limited to, MPEG-2, H.264/AVC, H.265/HEVC standards and codecs that are conformed to these standards. In the present application, the various encoders, decoders and devices that support SDR videos, but not HDR videos, are referred to as SDR (or non-HDR) encoders, decoders and devices, respectively, and the various encoders, decoders and devices that support HDR videos are referred to as HDR encoders, decoders and devices, respectively. In the present application, we use the terms "frame" and "picture" interchangeably to identify a sample array, often containing values for multiple components.

When handling HDR videos, for example, encoding or distributing HDR videos, it is desirable that the system can also provide backward compatibility to the devices or services that only support SDR videos. In the present application, we call a system that handles HDR videos with backward compatibility with SDR videos as an SDR/HDR system. In particular, with backward compatibility, an SDR decoder within an SDR/HDR system should be able to generate an associated SDR video representative of the HDR video, but with a more limited dynamic range than the HDR video.

A straightforward solution of designing an SDR/HDR distribution system could be simulcasting both SDR and HDR video streams on the distribution infrastructure, which virtually doubles the needed bandwidth compared to an infrastructure distributing only the SDR videos. When the bandwidth is limited, the SDR/HDR distribution system usually should take the bandwidth consumption into consideration.

Another solution is to reduce the dynamic range of an HDR video into a limited number of bits (for example, 10 bits) using a non-linear function, compress the reduced HDR video (for example, using the Main 10 profile of H.265/HEVC), and distribute the compressed video stream. Exemplary non-linear functions for reducing the dynamic range of an HDR video include PQ OETF, gamma compensation curves and BT.709/BT.2020 OETF ITU-R curves. More generally, an HDR video may be converted to an SDR video using an "absolute" non-linear mapping curve, where "absolute" should be understood as the mapped SDR value corresponds to a unique HDR input brightness, i.e., the curve is not adapted to the content. Using an "absolute" mapping curve, the reduced HDR video usually does not provide a good viewability (i.e., preserve the overall perceived brightness (i.e., dark vs. bright scenes) and perceived colors (for instance, preservation of hues and perceived saturation, also called colorfulness) of the corresponding HDR video) as an SDR video, and thus this solution lacks backward compatibility. In addition, the compression performance is usually poor.

In view of the drawbacks in the existing solutions, we consider that the following constraints should generally be taken into account when designing an SDR/HDR distribution system with backward compatibility with SDR devices and services:

- Minimizing the bitrate of the SDR/HDR distribution system;
- Ensuring good quality of both SDR and HDR decoded videos;
- Providing backward compatibility such that the SDR video is decodable and viewable for users only having access to SDR decoders; and
- Providing good viewability for the decoded SDR video, in particular, the SDR video should preserve the overall perceived brightness (i.e., dark vs. bright scenes) and perceived colors (for instance, preservation of hues and perceived saturation, also called colorfulness) of the corresponding HDR video.

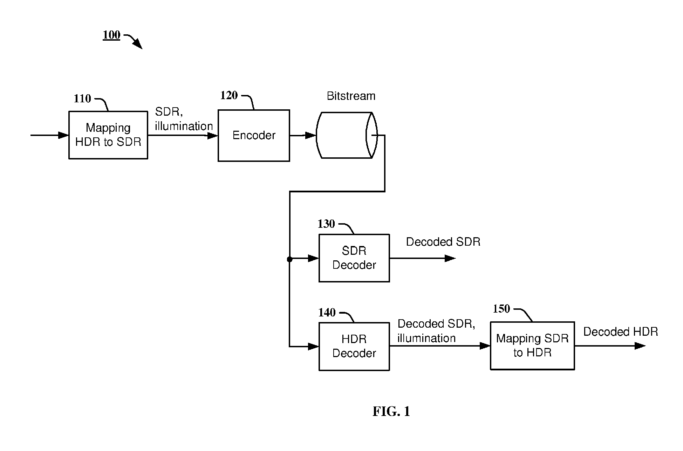

FIG. 1 illustrates an exemplary SDR/HDR distribution workflow 100 that transmits HDR videos while providing backward compatibility with SDR decoders. In workflow 100, an HDR frame is processed to obtain a corresponding SDR frame and illumination information (110). For example, an illumination frame (also called illumination map or backlight frame/image) can be determined from the HDR frame to represent the backlight of the HDR content.

Here, the term backlight is used by analogy with TV sets made of a color panel, such as an LCD panel, and a rear illumination apparatus, such as an LED array. The rear apparatus, usually generating white light, is used to illuminate the color panel to provide more brightness to the TV. As a consequence, the luminance of the TV is the product of the luminance of rear illuminator and the luminance of the color panel. This rear illuminator is often called "backlight."

Given the illumination frame, a residual frame (i.e., the SDR frame) is then obtained by dividing the HDR frame by the illumination map. Referring back to the analogy where HDR is equal to SDR times backlight, the SDR frame could be understood as the response of the (SDR) color panel. Subsequently, both the illumination information and the SDR frame are encoded (120) into a bitstream, using, for example, but not limited to, an H.264/AVC or H.265/HEVC encoder.

When encoding an HDR frame using such an approach, the encoder encodes two components: an SDR frame (the residual frame), which may be a viewable frame, and associated HDR illumination information. These two components may have different formats from each other, for example, the associated illumination information may be monochrome and the SDR frame may use a Y'CbCr or an RGB format. Also, each component can have different formats (for example, Y'CbCr, YUV, RGB and XYZ).

At the decoding side, the SDR frame can be decoded using an SDR decoder for backward compatibility (130), which provides a decoded SDR video as output. Alternatively, both the SDR frame and the illumination information can be decoded using an HDR decoder (140). Using the decoded SDR frame and illumination information, the SDR frame can be mapped back to a decoded HDR frame (150). The mapping from SDR to HDR (150) can also be performed by the HDR decoder (140).

When the illumination information is represented by an illumination map, different methods can be used to encode the illumination information and the SDR frame. In one example, the encoder may choose a frame packing approach, where the illumination map and the SDR frame are placed together to form a single picture before encoding.

In another example, the encoder may use auxiliary picture coding, which may require for instance an SHVC (scalable HEVC) framework even if only a single layer of coding is used, i.e., no scalable layer is used. Unlike H.264/AVC, here, the SHVC standard is needed only to define the auxiliary picture syntax as such pictures are not defined in the non-scalable HEVC standard. Generally, auxiliary pictures are defined in addition to the so-called "primary coded pictures," which correspond to the main video of the content. In one embodiment, the illumination map is encoded as an auxiliary picture, while the SDR frame is conveyed as a corresponding primary coded picture.

In yet another example, the encoder decouples the input HDR signal format from the output SDR signal formats, and conveys the indication of these two signal formats using the VUI (Video Usability Information) and an accompanying SEI (Supplemental Enhancement Information) message containing information needed for reconstruction of the output HDR signal. Specifically, SEI message embeds PSF (Point Spread Function) model, which needs an extra processing step to reconstruct the illumination map from the PSF model.

In the above, we discussed splitting an HDR video into two components, namely, an SDR video and an associated illumination map, in order to distribute the HDR video while preserving backward compatibility. In another embodiment, we may determine only a single modulation value (also called illumination value or backlight value, denoted as Ba), rather than an illumination map, for a whole frame. Based on the single modulation value, a corresponding SDR frame may be obtained for an HDR frame, for example, using a non-linear mapping function that basically performs normalization by the modulation value and a logarithm function. In one embodiment, the SDR luminance data may be determined through a set of mappings $L_{SDR} = g(Ba, Y_{HDR})$ that depends on the modulation value Ba and the input HDR luminance $Y_{HDR}$.

The mappings that depend on illumination information are "relative" in the sense that several input HDR sample values can correspond to a unique SDR mapped value depending on the value Ba. On the decoder side, the de-mapping from SDR to HDR is performed using the received Ba value and the inverse functions $g^{-1}(Ba, L_{SDR})$. Note that in the present application, the mapping process from the SDR to HDR video is also sometimes referred to as "de-mapping".

Referring back to FIG. 1 as an exemplary SDR/HDR distribution workflow, if a single modulation value is used, the workflow 100 would process an HDR frame to obtain the single modulation value as the illumination information and an SDR frame based on the single modulation value at 110.

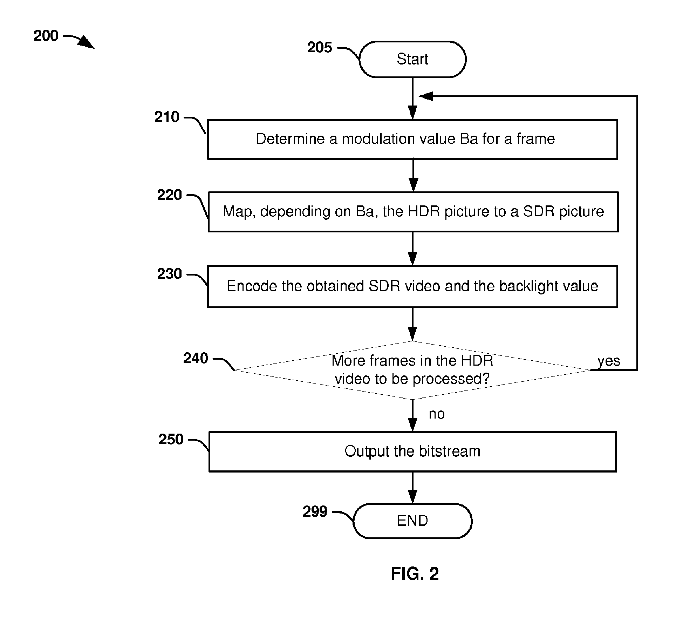

FIG. 2 illustrates an exemplary method 200 for encoding an HDR video according to the present principles. Method 200 starts at step 205. At step 210, it determines a modulation value Ba for an individual frame in the HDR video. Different methods can be used to calculate the modulation value, for example, but not limited to, using an average, median, minimum or maximum value of the HDR luminance. These operations may be performed in the linear HDR luminance domain $Y_{HDR,lin}$ or in a non-linear domain like $ln(Y_{HDR,lin})$ or $Y_{HDR,lin}^{\gamma}$ with $\gamma < 1$.

At step 220, based on the modulation value Ba, it maps the HDR picture onto an SDR picture represented in a format compatible with an SDR encoder. At step 230, it encodes the obtained SDR picture and the modulation value Ba. At step 240, it checks whether more frames in the HDR video need to be processed. If yes, it returns control to step 210; otherwise, it outputs the bitstream at step 250. Method 200 ends at step 299.

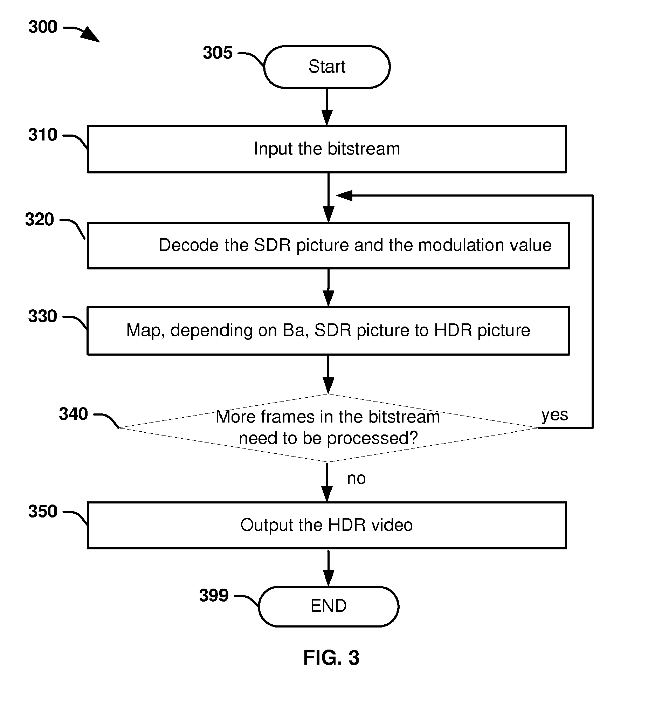

FIG. 3 illustrate an exemplary method 300 for decoding an HDR video according to the present principles. Method 300 starts at step 305. At step 310, it accesses a bitstream, for example, one generated according to method 200. At step 320, it decodes the bitstream to obtain a decoded SDR picture and a modulation value for the picture. At step 330, the decoded SDR picture is mapped to an HDR picture based on the modulation value. The de-mapping (i.e., SDR-to-HDR mapping) process used at step 330 should be the inverse of the HDR-to-SDR mapping processing (for example, the mapping used at step 220), used at the encoder side. At step 340, it checks whether more frames in the bitstream need to be processed. If yes, it returns control to step 320; otherwise, it outputs the recovered HDR video at step 350. Method 300 ends at step 399.

When the HDR bitstream is to be decoded by an SDR decoder, the modulation value could be discarded and only the SDR video would be decoded from the bitstream.

The steps in method 200 may proceed at a different order from what is shown in FIG. 2, for example, step 240 may be performed before step 230. That is, all frames in the HDR video would be processed to get the modulation values for all frames and the associated SDR video before they are encoded. Similarly, the steps in method 300 may proceed at a different order from what is shown in FIG. 3, for example, step 340 may be performed before step 330. That is, modulation values for all frames and an SDR video would be decoded before the SDR to HDR mapping.

In one embodiment, the following mapping function can be used to reduce the dynamic range and map an HDR picture to an SDR picture:

$$L_{SDR} = g(Ba, Y_{HDR}) = M_{SDR}\, f(Y_{HDR}/Ba)/f(P_{HDR}/Ba) \qquad (3)$$

where $P_{HDR}$ is the peak luminance of the HDR workflow, $M_{SDR}$ is the maximum SDR luma or luminance value, $L_{SDR}$ is the luminance of the SDR picture, $Y_{HDR}$ is the luminance of the HDR picture, and f() is a function. In one example, f can be a Slog function of the form

$$f(z) = a\, ln(b+z) + c \qquad \text{with } f(0)=0. \qquad (4)$$

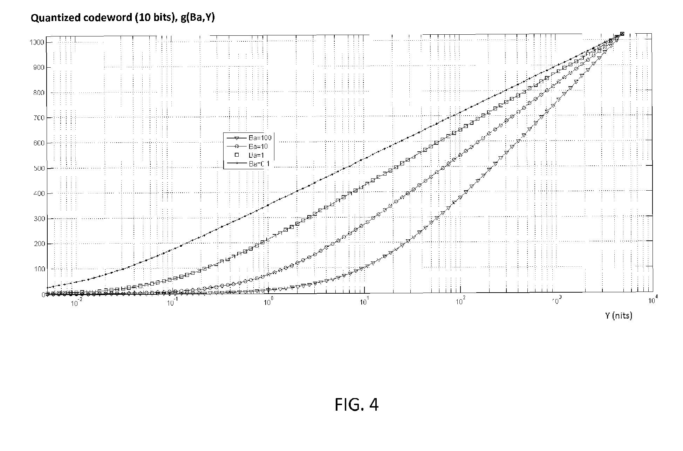

Examples of mapping functions $g(Ba, Y_{HDR})$ defined by f as a Slog function are shown in FIG. 4 for a peak $P_{HDR}$ =5000 nits and a mapping to an SDR video of 10 bits, i.e., $M_{SDR}$ =1023.

The inverse process (i.e., SDR to HDR mapping) at the decoder side can then be derived as:

$$Y_{HDR} = Ba \times f^{-1}(\, f(P_{HDR}/Ba)\, L_{SDR}/M_{SDR}) \qquad (5)$$

where, in the case of the Slog function f, its inverse $f^{-1}$ is

$$\mathrm{f}^{-1}(\mathrm{z}) = exp((\mathrm{z\text{-}c})/\mathrm{a})\text{-}\mathrm{b}. \qquad\qquad (6)$$

Given the dynamic reduction curve (i.e., HDR to SDR mapping), an HDR picture can be reduced to an SDR picture by the following steps:

1. Step 1: luminance dynamic range reduction. Reduction of the HDR luminance $Y_{HDR}$ dynamic range to get luminance $L_{SDR}$, for example at 10 bits, can be performed as $L_{SDR} = g(Ba, Y_{HDR})$;

2. Step 2: construction of two chroma components U (or Cb) and V (or Cr). Similar to the luma component, HDR chroma components can be reduced using $U_{SDR} = g(Ba_U, U_{HDR})$ and $V_{SDR} = g(Ba_V, V_{HDR})$, where $Ba_U = Ba_V = Ba$ in case of a monochrome modulation value. This completes the mapping process and the SDR video has three components: $L_{SDR}$, $U_{SDR}$ and $V_{SDR}$. In another embodiment, one can reduce the $RGB_{HDR}$ components by $R_{SDR} = g(Ba, R_{HDR})$, $G_{SDR} = g(Ba, G_{HDR})$, $B_{SDR} = g(Ba, B_{HDR})$ and deduce $UV_{SDR}$ as linear combinations of $RGB_{SDR}$, similarly to what is done in the standard SDR workflow by using the BT.709 or BT.2020 RGB to YUV matrices.

In the above, various numeric values are discussed in different operations. These numeric values are for exemplary purposes and can be adjusted based on applications. For example, when the SDR video was discussed above mainly as a 10-bit video, the SDR video can also take other dynamic ranges or bit depths. The techniques according to the present principles are also not limited to the color format of the HDR video or SDR video. For example, when the mapping process was mainly discussed above using the YUV format, the mapping can also be applied to other color formats, for example, but not limited to, YCbCr, RGB and XYZ formats. In addition, when we discussed that a modulation value is used for the entire frame, we can also have a modulation value for a picture area, for example, a slice or a tile when the picture has a very high resolution.

*Modulation Value Signaling*

To convey the modulation value, the modulation value is converted to a binary representation Ba_bin through a conversion method. This conversion may take the form of a simple scalar quantization of the Ba value, followed by a unary binary reprentation of the quatized value. This conversion may also consist in applying a logarithm function followed by a quantization step.

In the following, we describe different methods that can be used to signal the modulation value. The techniques according to the present principles can be used in HDR video distribution for example, using H.265/HEVC, H.264/AVC or any other video codecs, for broadcast and OTT (Over The Top), which is backward compatible with SDR.

Explicit Signaling

The following general syntax and semantics are proposed to convey the modulation value:

**TABLE 1 General Syntax**

| | |
|---|---|
| **log2_modulation_val_denom** | ue(v) |
| **modulation_val_minus1** | ue(v) |

**Semantics:**

**log2_modulation_val_denom** specifies the base 2 logarithm of the denominator for the modulation value. The value of log2_modulation_val_denom shall be in the range of 0 to 17, inclusive. When not present, the value of log2_modulation_val_denom is inferred to be equal to 0.

**modulation_val_minus1** plus 1 specifies the value of the modulation value. The value of modulation_val_minus1 shall be in the range of 0 to $2^{log2\_modulation\_val\_denom} - 1$, inclusive. When not present, the value of modulation_val_minus1 is inferred to be equal to 0.

To reconstruct the HDR signal using syntax elements described in TABLE 1, a decoder may proceed by:

(1) Derive the binary representation of the modulation value as follows:

$$modValRndOffset = log2\_ \ modulation\_val \ \_denom \ == \ 0 \ ? \ 0 : \ 1 \ << \ (log2\_$$
$$modulation\_val \_denom - 1 )\ \ \ \ \ \ \ \ \ \ \ (7)$$

$$Ba\_bin = modulation\_val\_minus1 + 1 + modValRndOffset \ \ \ \ \ \ \ \ (8)$$

(2) Derive a single modulation value Ba from the binary representation Ba_bin obtained from Eq. (8).

This derivation tyically corresponds to the reciprocal operation of the Ba to Ba_bin transformation function at the encoder side. For example, if the Ba to Ba_bin conversion consists in applying a logarithm function followed by a quantization step. The reverse process (Ba_bin to Ba) then consists in an exponential function that is the reciprocal function of that logarithm function.

Based on the modulation value, a decoder than can map the decoded SDR picture to an HDR picture, for example, using Eq. (5). The mapping function can be obtained from a standard that defines modulation value reconstruction, for example, in a system level standard such as MPEG system, BDA (Blu-ray Disc Association), ATSC and DVB.

In TABLE 1, the syntax elements are encoded using ue(v), such as defined in H.264/AVC or H.265/HEVC standards. In a variation, the syntax elements may be coded using other methods, for example, but not limited to, u(v), u(17), ae(v), se(v) or u(X), X being between 1 and 17, such as defined in H.264/AVC or H.265/HEVC standards. For example, if u(17) is used as the coding method, modulation_val_minus1 is transmitted using a fixed number of bits (i.e., 17 bits).

According to another embodiment, only the syntax element modulation_val_minus1 is transmitted and Ba_bin is derived as Ba_bin = modulation_val_minus1 + 1.

The general syntax elements described in TABLE 1 can be inserted into different syntax structures in the bitstream, for example, in an Supplemental Enhancement Information (SEI) message, a Parameter Set (for example, Sequence Parameter Set, Picture Parameter Set), a "header" (for example, a slice segment header), and Video Usability Information (VUI), in order of preference, as described in further detail below.

TABLE 2 describes an exemplary embodiment of inserting the modulation value into the SEI message. To differentiate the new syntax elements from existing ones, we provide the new syntax elements in shaded rows in the tables.

**TABLE 2 Modulation value information SEI message syntax**

| modulation_value_info( payloadSize ) { | **Descriptor** |
|---|---|
| **modulation_val_id** | ue(v) |
| **modulation_val_cancel_flag** | u(1) |
| if( !modulation_val_cancel_flag ) { | |
| **modulation_val_persistence_flag** | u(1) |
| **modulation_val_video_signal_info_present_flag** | u(1) |
| if( modulation_val_video_signal_info_present_flag ) { | |
| **modulation_val_full_range_flag** | u(1) |
| **modulation_val_primaries** | u(8) |
| **modulation_val_transfer_function** | u(8) |
| **modulation_val_matrix_coefficients** | u(8) |
| } | |
| **log2_modulation_val_denom** | ue(v) |

| modulation_val_minus1 | ue(v) |
|---|---|
| } | |
| } | |

**Semantics**

The semantics can be similar to the Colour Remapping Information SEI message of H.265/HEVC standard (defined in JCTVC-R1013v6) except the two new syntax elements defined in TABLE 1.

**modulation_val_id** contains an identifying number that may be used to identify the purpose of the modulation value information. The value of modulation_val_id shall be in the range of 0 to $2^{32}$ - 2, inclusive.

**modulation_val_cancel_flag** equal to 1 indicates that the modulation value information SEI message cancels the persistence of any previous modulation information SEI message in output order that applies to the current layer. modulation_val_cancel_flag equal to 0 indicates that modulation value information follows.

**modulation_val_persistence_flag** specifies the persistence of the modulation value information SEI message for the current layer. modulation_val_persistence_flag equal to 0 specifies that the modulation value information applies to the current picture only.

Let picA be the current picture. modulation_val_persistence_flag equal to 1 specifies that the modulation value information persists for the current layer in output order until either of the following conditions is true:

- A new CLVS of the current layer begins.

- The bit stream ends.

- A picture picB in the current layer in an access unit containing a modulation value information SEI message with the same value of modulation_val_id and applicable to the current layer is output for which PicOrderCnt( picB ) is greater than PicOrderCnt( picA ), where PicOrderCnt( picB ) and PicOrderCnt( picA ) are the PicOrderCntVal values of picB and picA, respectively, immediately after the invocation of the decoding process for picture order count for picB.

**modulation_val_video_signal_info_present_flag** equal to 1 specifies that syntax elements modulation_val_full_range_flag, modulation_val_primaries, modulation_val_transfer_function and modulation_val_matrix_coefficients are present, modulation_val video_signal_info_present_flag equal to 0 specifies that syntax elements modulation_val_full_range_flag, modulation_val_primaries, modulation_val_transfer_function and modulation_val_matrix_coefficients are not present.

**modulation_val_full_range_flag** has the same semantics as specified in clause E.3.1 of H.265/HEVC standard for the video_full_range_flag syntax element, except that modulation_val_full_range_flag specifies the colour space of the mapped reconstructed picture, rather than the colour space used for the CLVS. When not present, the value of modulation_val_full_range_flag is inferred to be equal to the value of video_full_range_flag.

**modulation_val_primaries** has the same semantics as specified in clause E.3.1 of H.265/HEVC standard for the colour_primaries syntax element, except that modulation_val_primaries specifies the colour space of the mapped reconstructed picture, rather than the colour space used for the CLVS. When not present, the value of modulation_val_primaries is inferred to be equal to the value of colour_primaries.

**modulation_val_transfer_function** has the same semantics as specified in clause E.3.1 of H.265/HEVC standard for the transfer_characteristics syntax element, except that modulation_val_transfer_function specifies the colour space of the mapped reconstructed picture, rather than the colour space used for the CLVS. When not present, the value of modulation_val_transfer_function is inferred to be equal to the value of transfer_characteristics.

**modulation_val_matrix_coefficients** has the same semantics as specified in clause E.3.1 of H.265/HEVC standard for the matrix_coeffs syntax element, except that modulation_val_matrix_coefficients specifies the colour space of the mapped reconstructed picture, rather than the colour space used for the CLVS. When not present, the value of modulation_val_matrix_coefficients is inferred to be equal to the value of matrix_coeffs.

TABLE 3 and TABLE 4 describe other exemplary embodiments of inserting the modulation value into an SEI message.

**TABLE 3 Modulation value information SEI message syntax – Variation 1**

| modulation_value_info( payloadSize ) { | Descriptor |
|---|---|
| modulation_val_cancel_flag | u(1) |
| if( !modulation_val_cancel_flag ) { | |
| modulation_val_persistence_flag | u(1) |
| log2_modulation_val_denom | ue(v) |
| modulation_val_minus1 | ue(v) |
| } | |
| } | |

**TABLE 4 Modulation value information SEI message syntax – Variation 2**

| modulation_value_info( payloadSize ) { | Descriptor |
|---|---|
| log2_modulation_val_denom | ue(v) |
| modulation_val_minus1 | ue(v) |
| } | |

TABLE 5 describes an exemplary embodiment of inserting the modulation value into the Picture Parameter Set (PPS).

**TABLE 5 Modulation value in PPS**

| pic_parameter_set_rbsp( ) { | Descriptor |
|---|---|
| pps_pic_parameter_set_id | ue(v) |
| pps_seq_parameter_set_id | ue(v) |
| … | |
| pps_extension_present_flag | u(1) |
| if( pps_extension_present_flag ) { | |
| pps_range_extension_flag | u(1) |
| pps_multilayer_extension_flag | u(1) |
| pps_hdr_extension_flag | u(1) |
| pps_extension_5bits | u(5) |
| } | |
| if( pps_range_extension_flag ) | |
| pps_range_extension( ) | |
| if( pps_multilayer_extension_flag ) | |
| pps_multilayer_extension( )   /* specified in Annex F */ | |
| if( pps_hdr_extension_flag) | |
| pps_hdr_extension( ) /* specified in Annex X*/ | |
| if( pps_extension_5bits ) | |
| while( more_rbsp_data( ) ) | |
| pps_extension_data_flag | u(1) |
| rbsp_trailing_bits( ) | |
| } | |

**Semantics**

**pps_hdr_extension_flag** equal to 1 specifies that the pps_hdr_extension( ) syntax structure is present in the PPS RBSP syntax structure. pps_hdr_extension_flag equal to 0 specifies that this syntax structure is not present. When not present, the value of pps_hdr_extension_flag is inferred to be equal to 0.

**pps_extension_5bits:** Because we add 1 bit for **pps_hdr_extension_flag**. We change pps_extension_6bit in H.265/HEVC specification to pps_extension_5bits for the purpose of byte alignment.

Note that extension flags such as pps_extension_5bits provides flexibility for the standard to extend while keeping backward compatibility for devices implementing a previous version of the standard. New features added in extension parts will be read by new devices implementing the new standard while legacy devices implementing former standard versions will just discard those flags.

TABLE 6 describes the Picture parameter set high dynamic range extension syntax.

**TABLE 6 Picture parameter set high dynamic range extension syntax**

| pps_hdr_extension( ) { | Descriptor |
|---|---|
| log2_modulation_val_denom | ue(v) |
| modulation_val_minus1 | ue(v) |
| } | |

In another embodiment, the modulation value information can also be inserted into Sequence Parameter Set as depicted in TABLE 7 and TABLE 8. Because using Picture Parameter Set to embed the modulation value information provides frame level flexibility, it may be preferable to use Picture Parameter Set over Sequence Parameter Set for sending modulation value information. In addition, Sequence Parameter Set is usually used to enable features at a sequence level rather than providing parameters values.

**TABLE 7 General sequence parameter set syntax**

| seq_parameter_set_rbsp( ) { | Descriptor |
|---|---|
| sps_video_parameter_set_id | u(4) |
| sps_max_sub_layers_minus1 | u(3) |
| sps_temporal_id_nesting_flag | u(1) |
| profile_tier_level( 1, sps_max_sub_layers_minus1 ) | |
| sps_seq_parameter_set_id | ue(v) |
| chroma_format_idc | ue(v) |
| … | |
| sps_extension_present_flag | u(1) |
| if( sps_extension_present_flag ) { | |
| sps_range_extension_flag | u(1) |
| sps_multilayer_extension_flag | u(1) |
| sps_hdr_extension_flag | u(1) |
| sps_extension_5bits | u(5) |
| } | |

| | |
|---|---|
| if( sps_range_extension_flag ) | |
| sps_range_extension( ) | |
| if( sps_multilayer_extension_flag ) | |
| sps_multilayer_extension( )   /* specified in Annex F */ | |
| if( sps_hdr_extension_flag ) | |
| sps_hdr_extension( )   /* specified in Annex X */ | |
| if( sps_extension_5bits ) | |
| while( more_rbsp_data( ) ) | |
| **sps_extension_data_flag** | u(1) |
| rbsp_trailing_bits( ) | |
| } | |

**TABLE 8 Sequence parameter set high dynamic range extension syntax**

| sps_hdr_extension( ) { | **Descriptor** |
|---|---|
| **log2_modulation_val_denom** | ue(v) |
| **modulation_val_minus1** | ue(v) |
| } | |

TABLE 6 can be modified as shown in TABLE 9 to insert modulation value into a header:

**TABLE 9 Picture parameter set high dynamic range extension syntax**

| pps_hdr_extension( ) { | **Descriptor** |
|---|---|
| **modulation_val_present_flag** | u(1) |
| } | |

**Semantics**

**modulation_val_present_flag** equal to 1 specifies that log2_modulation_val_denom and modulation_val_minus1 are present in the slice segment headers referring to the PPS. modulation_val_present_flag equal to 0 specifies that log2_modulation_val_denom and modulation_val_minus1 are not present in the slice segment headers referring to the PPS. When not present the value of modulation_val_present_flag is inferred to be equal to 0.
In another embodiment, the modulation value can also be inserted into a header as shown in TABLE 10.

**TABLE 10 General slice segment header syntax**

| slice_segment_header( ) { | **Descriptor** |
|---|---|
| **first_slice_segment_in_pic_flag** | u(1) |
| if( nal_unit_type >= BLA_W_LP && nal_unit_type <= RSV_IRAP_VCL23 ) | |
| **no_output_of_prior_pics_flag** | u(1) |

| | |
|---|---|
| **slice_pic_parameter_set_id** | ue(v) |
| if( !first_slice_segment_in_pic_flag ) { | |
| if( dependent_slice_segments_enabled_flag ) | |
| **dependent_slice_segment_flag** | u(1) |
| **slice_segment_address** | u(v) |
| } | |
| ... | |
| if( slice_segment_header_extension_present_flag ) { | |
| **slice_segment_header_extension_length** | ue(v) |
| if( modulation_val_present_flag ) { | |
| **log2_modulation_val_denom** | ue(v) |
| **modulation_val_minus1** | ue(v) |
| } | |
| while( more_data_in_slice_segment_header_extension( ) ) | |
| **slice_segment_header_extension_data_bit** | u(1) |
| } | |
| byte_alignment( ) | |
| } | |

TABLE 11 describes an example of inserting the modulation value into VUI. When VUI is already defined in an existing standard (for example, H.264/AVC or HEVC) without extension potential, inserting the modulation value information into VUI may break compliance with existing devices unlike previous embodiments. In addition, as VUI is defined as part of SPS, it may not have the temporal flexibility to achieve picture-wise adaptation.

## TABLE 11 General Video Usability Information syntax

| vui_parameters( ) { | Descriptor |
|---|---|
| **aspect_ratio_info_present_flag** | u(1) |
| if( aspect_ratio_info_present_flag ) { | |
| **aspect_ratio_idc** | u(8) |
| if( aspect_ratio_idc   = =   EXTENDED_SAR ) { | |
| **sar_width** | u(16) |
| **sar_height** | u(16) |
| } | |
| } | |
| ... | |
| **bitstream_restriction_flag** | u(1) |
| if( bitstream_restriction_flag ) { | |
| **tiles_fixed_structure_flag** | u(1) |
| **motion_vectors_over_pic_boundaries_flag** | u(1) |
| **restricted_ref_pic_lists_flag** | u(1) |
| **min_spatial_segmentation_idc** | ue(v) |
| **max_bytes_per_pic_denom** | ue(v) |

| | |
|---|---|
| max_bits_per_min_cu_denom | ue(v) |
| log2_max_mv_length_horizontal | ue(v) |
| log2_max_mv_length_vertical | ue(v) |
| } | |
| modulation_val_present_flag | u(1) |
| if( modulation_val_present_flag) { | |
| log2_modulation_val_denom | ue(v) |
| modulation_val_minus1 | ue(v) |
| } | |
| } | |

In the above, we discussed inserting the modulation value into various syntax structures, using H.265/HEVC as an example. The present principles can be applied to other standards.

Except the VUI implementation, a decoder in a non-HDR architecture or service is able to get the SDR video just by decoding the SDR bitstream without decoding modulation values. Advantageously, the coded Ba is by design discarded by SDR decoders, in order to preserve full backward compatibility with the existing or deployed SDR workflow.

Syntax and semantics for signaling modulation values are discussed above. As understood by those skilled in the art, they could be used to guide the decoding process and/or encoding process of the modulation value information, for example, they could be used to guide the encoding at step 230 of method 200, and to guide the decoding at step 320 of method 300.

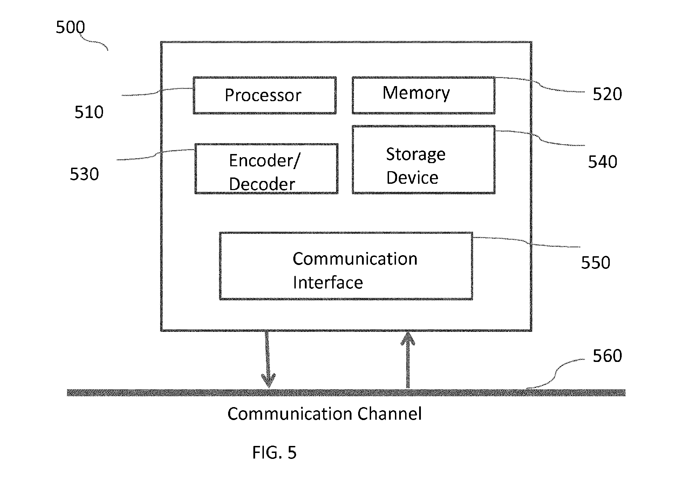

FIG. 5 illustrates a block diagram of an exemplary system in which various aspects of the exemplary embodiments of the present principles may be implemented. System 500 may be embodied as a device including the various components described below and is configured to perform the processes described above. Examples of such devices, include, but are not limited to, personal computers, laptop computers, smartphones, tablet computers, digital multimedia set top boxes, digital television receivers, personal video recording systems, connected home appliances, and servers. System 500 may be communicatively coupled to other similar systems, and to a display via a communication channel as shown in FIG. 5 and as known by those skilled in the art to implement the exemplary video system described above.

The system 500 may include at least one processor 510 configured to execute instructions loaded therein for implementing the various processes as discussed above. Processor 510 may include embedded memory, input output interface and various other circuitries as known in the art. The system 500 may also include at least one memory 520 (e.g., a volatile memory device, a non-volatile memory device). System 500 may additionally include a storage device 540, which may include non-volatile memory, including, but not limited to, EEPROM, ROM, PROM, RAM, DRAM, SRAM, flash, magnetic disk drive, and/or optical disk drive. The storage device 540 may comprise an internal storage device, an attached storage device and/or a network accessible storage device, as non-limiting examples. System 500 may also include an encoder/decoder module 530 configured to process data to provide an encoded video or decoded video.

Encoder/decoder module 530 represents the module(s) that may be included in a device to perform the encoding and/or decoding functions. As is known, a device may include one or both of the encoding and decoding modules. Additionally, encoder/decoder module 530 may be implemented as a separate element of system 500 or may be incorporated within processors 510 as a combination of hardware and software as known to those skilled in the art.

Program code to be loaded onto processors 510 to perform the various processes described hereinabove may be stored in storage device 540 and subsequently loaded onto memory 520 for execution by processors 510. In accordance with the exemplary embodiments of the present principles, one or more of the processor(s) 510, memory 520, storage device 540 and encoder/decoder module 530 may store one or more of the various items during the performance of the processes discussed herein above, including, but not limited to the modulation value, the SDR video, the HDR video, equations, formula, matrices, variables, operations, and operational logic.

The system 500 may also include communication interface 550 that enables communication with other devices via communication channel 560. The communication interface 550 may include, but is not limited to a transceiver configured to transmit and receive data from communication channel 560. The communication interface may include, but is not limited to, a modem or network card and the communication channel may be implemented within a wired and/or wireless medium. The various components of system 500 may be connected or communicatively coupled together using various suitable connections, including, but not limited to internal buses, wires, and printed circuit boards.

The exemplary embodiments according to the present principles may be carried out by computer software implemented by the processor 510 or by hardware, or by a combination of hardware and software. As a non-limiting example, the exemplary embodiments according to the present principles may be implemented by one or more integrated circuits. The memory 520 may be of any type appropriate to the technical environment and may be implemented using any appropriate data storage technology, such as optical memory devices, magnetic memory devices, semiconductor-based memory devices, fixed memory and removable memory, as non-limiting examples. The processor 510 may be of any type appropriate to the technical environment, and may encompass one or more of microprocessors, general purpose computers, special purpose computers and processors based on a multi-core architecture, as non-limiting examples.

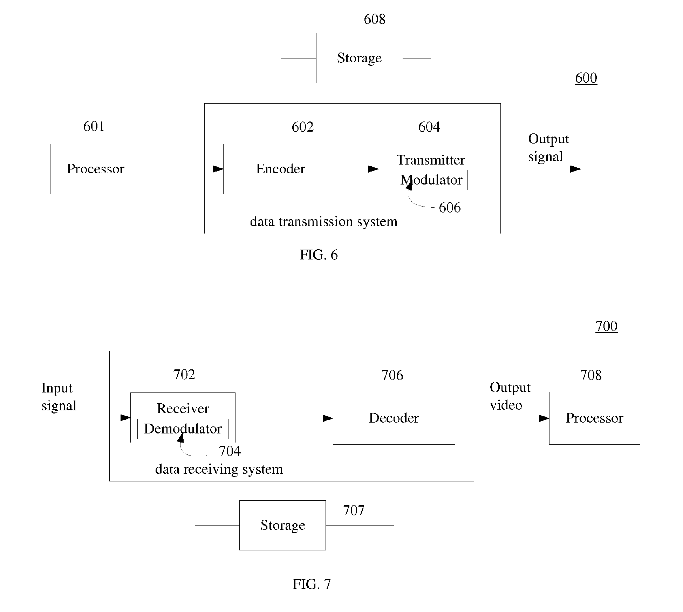

Referring to FIG. 6, a data transmission system 600 is shown, to which the features and principles described above may be applied. The data transmission system 600 may be, for example, a head-end or transmission system for transmitting a signal using any of a variety of media, such as, satellite, cable, telephone-line, or terrestrial broadcast. The data transmission system 600 also may be used to provide a signal for storage. The transmission may be provided over the Internet or some other network. The data transmission system 600 is capable of generating and delivering, for example, video content and other content.

The data transmission system 600 receives processed data and other information from a processor 601. In one implementation, the processor 601 generates the HDR video and/or represents an HDR picture using a single modulation value and an SDR picture representative of the HDR picture. The processor 601 may also provide metadata to 600 indicating, for example, the function used in the mapping curves or the values of constants.

The data transmission system or apparatus 600 includes an encoder 602 and a transmitter 604 capable of transmitting the encoded signal. The encoder 602 receives data information from the processor 601. The encoder 602 generates an encoded signal(s). Then encoder 602 may use, for example, method 200 as described in FIG. 2.

The encoder 602 may include sub-modules, including for example an assembly unit for receiving and assembling various pieces of information into a structured format for storage or transmission. The various pieces of information may include, for example, coded or uncoded video, and coded or uncoded elements. In some implementations, the encoder 602 includes the processor 601 and therefore performs the operations of the processor 601.

The transmitter 604 receives the encoded signal(s) from the encoder 602 and transmits the encoded signal(s) in one or more output signals. The transmitter 604 may be, for example, adapted to transmit a program signal having one or more bitstreams representing encoded pictures and/or information related thereto. Typical transmitters perform functions such as, for example, one or more of providing error-correction coding, interleaving the data in the signal, randomizing the energy in the signal, and modulating the signal onto one or more carriers using a modulator 606. The transmitter 604 may include, or interface with, an antenna (not shown). Further, implementations of the transmitter 604 may be limited to the modulator 606.

The data transmission system 600 is also communicatively coupled to a storage unit 608. In one implementation, the storage unit 608 is coupled to the encoder 602, and stores an encoded bitstream from the encoder 602. In another implementation, the storage unit 608 is coupled to the transmitter 604, and stores a bitstream from the transmitter 604. The bitstream from the transmitter 604 may include, for example, one or more encoded bitstreams that have been further processed by the transmitter 604. The storage unit 608 is, in different implementations, one or more of a standard DVD, a Blu-Ray disc, a hard drive, or some other storage device.

Referring to FIG. 7, a data receiving system 700 is shown to which the features and principles described above may be applied. The data receiving system 700 may be configured to receive signals over a variety of media, such as storage device, satellite, cable, telephone-line, or terrestrial broadcast. The signals may be received over the Internet or some other network.

The data receiving system 700 may be, for example, a cell-phone, a computer, a set-top box, a television, or other device that receives encoded video and provides, for example, decoded video signal for display (display to a user, for example), for processing, or for storage. Thus, the data receiving system 700 may provide its output to, for example, a screen of a television, a computer monitor, a computer (for storage, processing, or display), or some other storage, processing, or display device.

The data receiving system 700 is capable of receiving and processing data information. The data receiving system or apparatus 700 includes a receiver 702 for receiving an encoded signal, such as, for example, the signals described in the implementations of this application. The receiver 702 may receive, for example, a signal providing one or more of the HDR and SDR videos, or a signal output from the data transmission system 600 of FIG. 6.

The receiver 702 may be, for example, adapted to receive a program signal having a plurality of bitstreams representing encoded HDR pictures. Typical receivers perform functions such as, for example, one or more of receiving a modulated and encoded data signal, demodulating the data signal from one or more carriers using a demodulator 704, de-randomizing the energy in the signal, de-interleaving the data in the signal, and error-correction decoding the signal. The receiver 702 may include, or interface with, an antenna (not shown). Implementations of the receiver 702 may be limited to the demodulator 704.

The data receiving system 700 includes a decoder 706. The receiver 702 provides a received signal to the decoder 706. The signal provided to the decoder 706 by the receiver 702 may include one or more encoded bitstreams. The decoder 706 outputs a decoded signal, such as, for example, decoded video signals including video information.

The data receiving system or apparatus 700 is also communicatively coupled to a storage unit 707. In one implementation, the storage unit 707 is coupled to the receiver 702, and the receiver 702 accesses a bitstream from the storage unit 707. In another implementation, the storage unit 707 is coupled to the decoder 706, and the decoder 706 accesses a bitstream from the storage unit 707. The bitstream accessed from the storage unit 707 includes, in different implementations, one or more encoded bitstreams. The storage unit 707 is, in different implementations, one or more of a standard DVD, a Blu-Ray disc, a hard drive, or some other storage device.

The output data from the decoder 706 is provided, in one implementation, to a processor 708. The processor 708 is, in one implementation, a processor configured for performing the SDR to HDR mapping. In some implementations, the decoder 706 includes the processor 708 and therefore performs the operations of the processor 708. In other implementations, the processor 708 is part of a downstream device such as, for example, a set-top box or a television.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1. A method for decoding a bitstream including a High Dynamic Range (HDR) picture, comprising:

   determining a modulation value from at least one syntax element included in the bitstream; and
   determining the HDR picture responsive to the determined modulation value and a Standard Dynamic Range (SDR) picture included in the bitstream.

2. The method of claim 1, wherein the at least one syntax element is included in at least one of a Picture Parameter Set, a Sequence Parameter Set, a Supplemental Enhancement Information (SEI) message, a Video Usability Information (VUI), and a header.

3. The method of claim 1, wherein the HDR picture is included in an HDR video, and wherein the modulation value is decoded for each HDR picture in the HDR video.

4. The method of claim 1, wherein the determining the modulation value comprises:

   decoding a first syntax element and a second syntax element, the first syntax element indicative of a base-2 logarithm of a denominator for the modulation value, and the second syntax element indicative of a numerator for the modulation value; and
   determining the modulation value responsive to the first syntax element and the second syntax element.

5. The method of claim 1, wherein a single modulation value is determined from the bitstream for one of (1) the HDR picture; (2) a slice of the HDR picture; and (3) a tile of the HDR picture.

6. The method of claim 1, wherein the SDR picture is representative of the HDR picture.

7. An apparatus for decoding a bitstream including a High Dynamic Range (HDR) picture, comprising:

   a communication interface configured to access the bitstream; and
   a decoder configured to
   determine a modulation value from at least one syntax element included in the bit stream, and
   determine the HDR picture responsive to the determined modulation value and a Standard Dynamic Range (SDR) picture included in the bitstream.

8. The apparatus of claim 7, wherein the at least one syntax element is included in at least one of a Picture Parameter Set, a Sequence Parameter Set, a Supplemental Enhancement Information (SEI) message, a Video Usability Information (VUI), and a header.

9. The apparatus of claim 7, wherein the HDR picture is included in an HDR video, and wherein the modulation value is decoded for each HDR picture in the HDR video.

10. The apparatus of claim 7, wherein the decoder is configured to decode a first syntax element and a second syntax element in order to determine the modulation value, the first syntax element indicative of a base-2 logarithm of a denominator for the modulation value, and the second syntax element indicative of a numerator for the modulation value.

11. The apparatus of claim 7, wherein a single modulation value is determined from the bitstream for one of (1) the HDR picture; (2) a slice of the HDR picture; and (3) a tile of the HDR picture.

12. The apparatus of claim 7, wherein the SDR picture is representative of the HDR picture.

13. A non-transitory computer readable storage medium having stored thereon instructions for decoding a bitstream including a High Dynamic Range (HDR) picture, the instructions causing a processor to perform at least:

   determining a modulation value from at least one syntax element included in the bitstream; and
   determining the HDR picture responsive to the determined modulation value and a Standard Dynamic Range (SDR) picture included in the bitstream.

FIG. 1

200 →

205 — ( Start )

210 — | Determine a modulation value Ba for a frame |

220 — | Map, depending on Ba, the HDR picture to a SDR picture |

230 — | Encode the obtained SDR video and the backlight value |

240 — ◇ More frames in the HDR video to be processed? ◇ → yes

↓ no

250 — | Output the bitstream |

299 — ( END )

**FIG. 2**

**FIG. 3**

**Quantized codeword (10 bits), g(Ba,Y)**

FIG. 4

500

510

530

Processor

Encoder/
Decoder

Memory

Storage
Device

520

540

Communication
Interface

550

560

Communication Channel

FIG. 5

608

Storage

600

601

Processor

602

Encoder

604

Transmitter

Modulator

606

Output
signal

data transmission system

FIG. 6

700

Input
signal

702

Receiver

Demodulator

704

706

Decoder

Output
video

708

Processor

data receiving system

Storage

707

FIG. 7

Europäisches
Patentamt

European
Patent Office

Office européen
des brevets

# EUROPEAN SEARCH REPORT

Application Number

EP 15 30 5108

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 406 959 A1 (DOLBY LAB LICENSING CORP [US]) 18 January 2012 (2012-01-18) * paragraphs [0054], [0075]; figure 7 * ----- | 1-13 | INV. G06T5/00 H04N19/30 H04N19/46 |
| X | EP 1 827 024 A1 (SHARP KK [JP]) 29 August 2007 (2007-08-29) * paragraph [0031] - paragraph [0034]; figure 2 * ----- | 1-13 | |
| X | SEGALL A ET AL: "Tone mapping SEI", 19. JVT MEETING; 31-03-2006 - 07-04-2006; GENEVA, CH; (JOINT VIDEOTEAM OF ISO/IEC JTC1/SC29/WG11 AND ITU-T SG.16 ),, no. JVT-S087, 1 April 2006 (2006-04-01), XP030006466, ISSN: 0000-0409 * abstract * ----- | 1-13 | |
| | | | TECHNICAL FIELDS SEARCHED (IPC) |
| | | | G06T H04N |

The present search report has been drawn up for all claims

| Place of search | Date of completion of the search | Examiner |
|---|---|---|
| Munich | 1 July 2015 | Oelbaum, Tobias |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                                  
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 30 5108

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2015

| Patent document cited in search report | | Publication date | Patent family member(s) | Publication date |
|---|---|---|---|---|
| EP 2406959 | A1 | 18-01-2012 | CN 102388612 A | 21-03-2012 |
| | | | EP 2406959 A1 | 18-01-2012 |
| | | | JP 5589006 B2 | 10-09-2014 |
| | | | JP 2012520619 A | 06-09-2012 |
| | | | KR 20110115169 A | 20-10-2011 |
| | | | RU 2011138056 A | 27-03-2013 |
| | | | US 2011194618 A1 | 11-08-2011 |
| | | | WO 2010105036 A1 | 16-09-2010 |
| EP 1827024 | A1 | 29-08-2007 | EP 1827024 A1 | 29-08-2007 |
| | | | JP 4607136 B2 | 05-01-2011 |
| | | | JP 2007243942 A | 20-09-2007 |
| | | | JP 2010213360 A | 24-09-2010 |
| | | | US 2007201560 A1 | 30-08-2007 |

EPO FORM P0459

For more details about this annex : see Official Journal of the European Patent Office, No. 12/82